Europäisches Patentamt

European Patent Office

Office européen des brevets

(11) Publication number: **0 411 723 A1**

# EUROPEAN PATENT APPLICATION

(21) Application number: 90202144.3

(51) Int. Cl.5: **F16L 11/12**

(22) Date of filing: 06.08.90

(30) Priority: 04.08.89 NL 8902015

(43) Date of publication of application:
06.02.91 Bulletin 91/06

(84) Designated Contracting States:
CH DE DK ES FR GB IT LI NL SE

(71) Applicant: **Applied Power Inc.**
**250 Executive Drive**
**Brookfield Wisconsin 53005(US)**

(72) Inventor: **Kuiper, Berend**
**Peterskamplaan 89**
**NL-7576 TN Oldenzaal(NL)**
Inventor: **Oudelaar, Tone**
**Brederostraat 3**
**NL-7576 CA Oldenzaal(NL)**

(74) Representative: **Boelsma, Gerben Harm, Ir. et al**
**Octrooibureau Polak & Charlouis Laan**
**Copes van Cattenburch 80 80**
**NL-2585 GD Den Haag(NL)**

(54) A flexible conduit with a core portion extending through the flow passage thereof.

(57) A flexible fluid conduit (1), with a core portion (2) extending therethrough, so as to prevent the conduit (1) from getting sqeezed or pinched together in case of folding and/or twisting the conduit. According to the invention the core portion (2) is formed by one or more electrical leads.

# A FLEXIBLE CONDUIT, WITH A CORE PORTION EXTENDING THROUGH THE FLOW PASSAGE THEREOF.

The invention relates to a flexible conduit for a liquid or gaseous fluid, with a core portion extending through the flow passage thereof, so as to prevent the conduit from being sqeezed or pinched together in case of folding and/or twisting of the conduit.

Conduits of this type are known. As an example GB-A-2,179,721 discloses a garden hose, in which the flow passage is divided into two sections by means of a partition which functions as a core portion and prevents the conduit from getting pinched or sqeezed together, so that the fluid may be kept flowing through the hose under all circumstances.

Another example of such a conduit is disclosed in US-A-3,402,741, where a wire of a flexible nature but of a rigid cross-sectional shape is extending as a separate core through the flow passage of the conduit.

A flexible conduit of the type above referred to is also suitable for use in hospitals and other circumstances, where a physiological saline has to be supplied from a reservoir through a flexible hose and a catheter into the body of a patient. In such circumstances a flexible conduit without a core portion as mentioned herein above may readily get sqeezed or pinched together by various causes, e.g. by certain movements of the patient or due to the conduit getting sqeezed or pinched between parts of the (height)adjusting device of a modern hospital bed. This might cause an interruption of the supply of the physiological saline and would lead to serious consequences if the interruption would not be discovered immediately by the patient himself or the nursing personnel.

More particularly a conduit of the type mentioned herein above is also suitable for use in pneumatic switch means for electric equipment, such as an electro-mechanical adjusting device in a hospital bed. Such equipment is often designed to be controled by the patient himself. For this purpose there is a hand-control box, which is connected to the switch adjacent the equipment by means of a flexible air hose (vide FR-A-2,153,349). The use of an air hose with a core extending therethrough will prevent the air hose from being sqeezed or pinched together and thereby ensure the passage of air through the hose whenever it is desired to switch the equipment on or off.

The present invention provides a flexible tube of the type above referred to, which is characterized in that the core portion extending therethrough is constituted by one or more electrical leads. Such a composite conduit is particularly suitable for use in circumstances, where remote controled electrical equipment is connected to the mains by means of a wall plug, in which an electric switch is incorporated and designed to be pneumatically operated from a remote location, such as a patient location. Such a composite conduit is as flexible as a conduit without a core portion, while it has substantially greater flexibility than when a separate air hose would be brought together with a pair of electric leads within a common covering sheath, such as e.g. disclosed in GB-A-1,325,926.

A composite conduit as proposed by the present invention is also completelty safe, because the electric leads are completely covered by the proper conduit and thus will be prevented from being exposed when under voltage. For as soon as the proper conduit would become pinched off or open, this would cause the (slight) switching pressure, to fall away and cause the switch into the wall plug to open instantly, thereby disconnecting said electric leads from the mains.

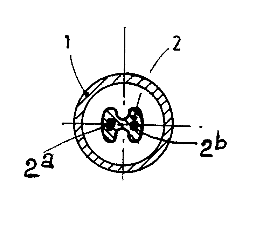

In the accompanying drawing a cross-sectional view of a conduit according to this invention has been shown by way of example.

The flexible conduit or hose 1, shown in the drawing, is formed of a suitable material, such as (artificial) rubber or similar material. A core 2 is extending through said conduit or hose 1, which is constituted by a pair of electrical leads 2a and 2b, which are embedded within the insulating material of the core 2.

It will be clear, that various cross-sectional shapes for the core 2 will have the effect of preventing the (outer) conduit or hose 1 to get sqeezed or pinched together when folding or twisting the conduit or hose in use.

Special connectors will have to be attached to the ends of the composite conduit or hose so as to lead the proper conduit and the electrical leads to the associated pneumatic and electrical areas within the equipment and/or plug to be connected.

## Claims

A flexible conduit for a liquid or gaseous fluid, with a core portion extending through the flow passage thereof, so as to prevent the conduit from being sqeezed or pinched together in case of folding and/or twisting of the conduit, characterized in that the core portion extending therethrough is constituted by one or more electrical leads.

European
Patent Office

**EUROPEAN SEARCH
REPORT**

Application Number

**EP 90 20 2144**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 211 267 (MAY)<br>* abstract; figure 3 *<br>— — — | 1 | F 16 L 11/12 |
| X | FR-A-1 347 596 (STORZ)<br>* page 1, right-hand column, line 32 - page 2, left-hand column, line 3; figures *<br>— — — | 1 | |
| A | DE-U-8 700 361 (LINHART)<br>* page 15, lines 1 - 6; figure 4 *<br>— — — — — | 1 | |
| | | | **TECHNICAL FIELDS SEARCHED (Int. Cl.5)**<br><br>F 16 L |

The present search report has been drawn up for all claims

| Place of search | Date of completion of search | Examiner |
|---|---|---|
| The Hague | 30 October 90 | HUBEAU M.G. |